# EUROPÄISCHE PATENTSCHRIFT

(11) **EP 0 775 177 B1**
(45) Veröffentlichungstag und Bekanntmachung des Hinweises auf die Patenterteilung: **14.07.1999**
(21) Anmeldenummer: 95929796.1
(22) Anmeldetag: 04.08.1995
(51) Int. Cl.: C09J 131/02, C09J 161/04

(54) **WÄSSRIGE KONTAKTKLEBSTOFFDISPERSION MIT HOHER LAGERSTABILITÄT UND AUSWASCHBAREM FILM**
AQUEOUS CONTACT ADHESIVE DISPERSION WITH HIGH STORAGE STABILITY AND FORMING A WASH-OFF FILM
DISPERSION AQUEUSE D'ADHESIF DE CONTACT TRES STABLE AU STOCKAGE ET FORMANT UN FILM POUVANT ETRE ENLEVE PAR LAVAGE

(30) Priorität: 12.08.1994 DE 4428645
(43) Veröffentlichungstag der Anmeldung: 28.05.1997
(73) Patentinhaber: Henkel Kommanditgesellschaft auf Aktien, 40191 Düsseldorf (DE)
(72) Erfinder:
(86) Internationale Anmeldenummer: EP9503107
(87) Internationale Veröffentlichungsnummer: WO9605263

(56) Entgegenhaltungen:
- EP-A- 0 454 533
- EP-A- 0 547 507
- DE-A- 4 428 645

## Beschreibung

Die Erfindung betrifft eine wäßrige Kontaktklebstoffdispersion mit hoher Lagerstabilität und auswaschbarem Film auf der Basis von Copolymerisaten aus Vinylester, Acrylsäureester, Methacrylsäureester, ethylenisch ungesättigte vernetzend wirkende Verbindungen, ethylenisch ungesättigte Carbonsäuren (Meth)acrylamide, ethylenisch ungesättigte Hydroxyalkyl-funktionelle Verbindungen und ethylenisch ungesättigte Sulfate und/oder Sulfonate.

Ein derartiger Kontaktklebstoff ist bekannt. So beschreibt die EP 0 547 507 einen wäßrigen Kontaktklebstoff, der nur dieses Copolymerisat enthält. Als besonderer Vorteil dieser Kontaktklebstoffdispersion wird hervorgehoben, daß eine zusätzliche Modifikation, z. B. durch Zusatz eines Weichmachers oder eines Klebrigmachers nicht nötig ist. Dementsprechend sind auch die Beispiele. Es hat sich jedoch gezeigt, daß dieser bekannte Kontaktklebstoff bezüglich der Festigkeiten verbesserungsbedürftig ist, insbesondere auch bezüglich der Wärmestandfestigkeit, der Zugscherfestigkeit und des Oberflächentacks.

Eine Schwäche der lösungsmittelfreien Kontaktklebstoffe - verglichen mit den lösungsmittelhaltigen Kontaktklebstoffen - ist ihre Lagerstabilität im Sinne von Konstanz wichtiger Eigenschaften, insbesondere der Viskosität. Ursachen dafür gibt es viele, z.B. die Neigung zur Sedimentation von dispergierten oder suspendierten Teilchen, die physikalische Wechselwirkung der unterschiedlichen Emulgatorsysteme von Harz- und Polymer-Dispersionen und Hydrolyseerscheinungen. Daher liegt die Lagerstabilität im Bereich von 0,3 bis maximal 1,5 Jahren. Für die wichtigen Anwendungsbereiche "Do it yourself" und "Handwerker" sollte die Lagerstabilität aber zumindest 1,5 bis 2 Jahre betragen.

Daraus ergibt sich die Aufgabe, eine wäßrige Kontaktklebstoffdispersion mit verbesserter Lagerstabilität bereitzustellen, die bezüglich der Festigkeit besser ist, insbesondere bezüglich der Wärmestandfestigkeit und der Zugscherfestigkeit.

Die erfindungsgemäße Lösung ist den Patentansprüchen zu entnehmen. Sie besteht im wesentlichen darin, daß man einer wäßrigen Kontaktklebstoffdispersion auf der Basis eines Copolymerisates aus Vinylester, Acrylsäureester, Methacrylsäureester, ethylenisch ungesättigten vernetzend wirkenden Verbindungen, ethylenisch ungesättigten Carbonsäuren, (Meth)acrylamiden, ethylenisch ungesättigten Hydroxyalkyl-funktionellen Verbindungen und ethylenisch ungesättigten Sulfaten und/oder Sulfonaten eine Phenolharzdispersion zusetzt, wobei das Phenolharz auf einem Resol, einem Metalloxid und einem thermoplastischen Phenol-Terpen-Harz basiert und wobei der Anteil des Copolymerisates 60 bis 95 % und der Anteil des Phenolharzes 5 bis 40 Gew.-% des Feststoffgehaltes ausmacht.

Vorzugsweise wird eine wäßrige Dispersion des Copolymerisates verwendet, wie sie in der EP 0 547 507 beschrieben ist. Die Dispersion enthält, bezogen auf das Gesamtgewicht der Dispersion, 40 bis 70 Gew.-% eines Copolymerisates, welches nach dem Emulsionspolymerisationsverfahren hergestellt wird, dessen Temperaturbereich des Glasüberganges im Bereich von -20 bis +20°C liegt und dessen K-Wert nach Fikentscher zwischen 50 und 180 liegt. Sie ist dadurch gekennzeichnet, daß das Copolymerisat
a) 40 bis 70 Gew.-% Vinylester von aliphatischen Carbonsäuren mit 2 bis 12 C-Atomen,
b) 10 bis 40 Gew.-% Acrylsäureester von aliphatischen Alkoholen mit 4 bis 12 C-Atomen,
c) 8 bis 15 Gew.-% Methacrylsäureester von aliphatischen Alkoholen mit 4 bis 12 C-Atomen,
d) 0,1 bis 3 Gew-% ethylenisch ungesättigte, vernetzend wirkende Verbindungen,
e) 0,1 bis 5 Gew.-% ethylenisch ungesättigte Carbonsäuren,
f) 0,1 bis 2 Gew.-% substituierte und unsubstituierte (Meth)acrylamide,
g) 0,5 bis 3 Gew.-% ethylenisch ungesättigte Hydroxyalkylfunktionelle Verbindungen,
h) 0,5 bis 3 Gew.-% ethylenisch ungesättigte Sulfate und/oder Sulfonate
enthält, wobei die Angaben in Gewichtsprozent jeweils auf das Gesamtgewicht des Copolymerisats bezogen sind und sich die Anteile in Gewichtsprozent im Copolymerisat auf 100 Gew.-% aufaddieren.

Bevorzugte Vinylester (a) sind Vinylacetat, Vinylpropionat, Vinyllaurat und Vinylester der Versatic-Säuren (gesättigte alpha-verzweigte Monocarbonsäuren), insbesondere mit 9 C-Atomen oder Gemische der genannten Monomere. Besonders bevorzugt wird Vinylacetat allein oder im Gemisch mit einem oder mehreren weiteren Vinylestern in Anteilen von 25 bis 55 Gew-%, insbesondere von 30 bis 50 Gew.-%, und Vinyllaurat im Gemisch mit einem oder mehreren weiteren Vinylestern in Anteilen von 5 bis 30 Gew.-%, insbesondere von 10 bis 25 Gew.-%.
Bevorzugte Acrylsäureester (b) sind n-Butylacrylat und 2-Ethylhexylacrylat oder deren Gemische. Vorzugsweise werden diese in Anteilen von 10 bis 40 Gew.-%, besonders bevorzugt 15 bis 30 Gew.-%, eingesetzt.
Bevorzugt Methacrylsäureester (c) sind Methlmethacrylat, tert.-Butylmethacrylat, Ethylmethacrylat, n-Propylmethacrylat, i-Propylmethacrylat oder Gemische der genannten Monomere. Besonders bevorzugt wird Methylmethacrylat. Die Methacrylsäureester werden vorzugsweise in Anteilen von 8 bis 12 Gew.-% eingesetzt.
Bevorzugte ethylenisch ungesättigte, vernetzend wirkende Verbindungen (d) sind beispielsweise Acrylamidoglykolsäure (AGA), Methacrylamidoglykolsäuremethylester (MAGME), 2-Acrylamido-2-Methylpropansulfonsäure (AMPS), N-Methylolacrylamid (NMAA), N-Methylolmethacrylamid, N-Methylolallylcarbamat, Alkylether oder Ester des N-Methylolacrylamids, des N-Methylolmethacrylamids oder des N-Methylolallylcarbamats. Besonders bevorzugt wird N-Methylolacrylamid (NMAA).
Als ethylenisch ungesättigte Carbonsäuren (e) werden vorzugsweise alpha,beta-ungesättigte Carbonsäuren, besonders bevorzugt Acrylsäure und Methacrylsäure, insbesondere Acrylsäure eingesetzt.
Als Komponente (f) wird vorzugsweise Acrylamid eingesetzt..Der bevorzugte Anteil beträgt von 0,2 bis 1,5 Gew.-%.
Als Hydroxyalkyl-funktionelle Verbindungen (g) werden vorzugsweise 2-Hydroxyethylacrylat und 2-Hydroxypropylacrylat eingesetzt, besonders bevorzugt wird 2-Hydroxyethylacrylat.
Als ethylenisch ungesättigte Sulfate und Sulfonate (h) kommen vorzugsweise die Alkalisalze der Vinylsulfonsäure zur Verwendung.

Das Copolymerisat wird folgendermaBen nach dem Emulsionspolymerisationsverfahren hergestellt. Die Komponente (a) wird dabei vollständig vorgelegt oder teilweise dosiert, vorzugsweise vollständig vorgelegt. Die Komponenten (b) und (c) werden zu wenigstens 50 Gew.-% erst während der Reaktion dosiert. Die Komponente (d) kann ebenfalls entweder teilweise vorgelegt und dosiert, oder vollständig dosiert werden, bevorzugt wird sie vollständig dosiert. Die Komponente (e) kann ebenfalls vollständig dosiert, teilweise vorgelegt und teilweise dosiert oder vollständig vorgelegt werden. Die Komponenten (f) und (h) werden vollständig vorgelegt, während Komponente (g) vollständig dosiert wird.

Die Polymerisation wird unter Verwendung üblicher wasserlöslicher Radikalbildner gestartet. Dies sind insbesondere Persulfate (z. B. Ammoniumpersulat, Kaliumpersulfat), Hydroperoxide (z. B. t-Butyl-Hydroperoxid) und Perphsophate. Der bevorzugte Anteil dieser Radikalbildner beträgt 0,05 bis 3 Gew.-% bezogen auf die Gesamtmonomermasse. Diese Verbindungen können entweder direkt durch Temperaturerhöhung oder bei niedrigeren Temperaturen durch Einsatz von Reduktionsmitteln aktiviert werden. Beispiele für derartige Reduktionsmittel sind Natriumformaldehydsulfoxylat, Natriumsulfit, Natriumhydrogensulfit oder Dithionit.

Bevorzugter pH-Bereich für die Polymerisationsreaktion ist von 2 bis 5,5. Die pH-Einstellung bzw. pH-Regelung erfolgt mit Säuren, z. B. Schwefelsäure, Ameisensäure, Essigsäure und Basen, z. B. Ammoniak, Natronlauge, Kalilauge, Amine oder durch Verwendung von Puffersubstanzen z. B. Alkaliacetat, Alkalicarbonat, Alkalidiphosphate.

Die Polymerisation wird in Gegenwart von üblichen Emulgatoren durchgeführt. Diese sind insbesondere Alkyl- und Alkylarylethoxylate, die gegebenenfalls zusätzlich mit Sulfat-, Phosphat-, Succinat- oder Sulfonatgruppen versehen sein können. Die bevorzugte Menge an diesen Emulgatoren beträgt 1 bis 5 Gew.-%, bezogen auf Gesamtmasse der Dispersion.

Vorzugsweise wird ein Copolymerisat gemäß Beispiel 1 der EP 0 547 507 A1 verwendet:

In einem Reaktor, der mit Rückflußkühler, Rührer, Zudosiermöglichkeiten, Stickstoffeinleitung sowie Heiz- und Kühlmöglichkeiten versehen ist, werden 401 g entmineralisiertes Wasser, 8 g eines Nonylphenolpolyglykolethers (mit im Mittel 23 EO-Einheiten), 3 g eines C₁₅-Alkylsulfonates, 18 g Natriumvinylsulfonat, 5 g Acrylamid und 9,5 g Acrylsäure vorgelegt und der pH-Wert mit konzentrierter Ammoniaklösung auf 3,5 eingestellt. In diese Lösung werden 355 g Vinylacetat, 139 g Vinyllaurat und 49 g 2-Ethylhexylacrylat einemulgiert. Es wird auf 50 °C aufgeheizt und mit der Dosierung einer 3,5 %igen Ammoniumpersulfatlösung (10,5 g/h) und einer 2 %igen Natriumformaldehydsulfoxylatlösung (10,5 g/h) begonnen. Nach Reaktionsbeginn werden über einen Zeitraum von 4,5 Stunden ein Gemisch von 186 g 2-Ethylhexylacrylat, 87 g Methylmethacrylat, 15 g Hydroxyethylacrylat und 14 g Acrylsäure (Dosierung 1) sowie eine Lösung von weiteren 7,5 g des Nonylphenolpolyglykolethers und 6 g N-Methylolacrylamid in 35 g entmineralisiertem Wasser kontinuierlich zudosiert. Die Dosierung der Ammoniumpersulfatlösung und der Natriumformaldehydsulfoxylatlösung wird danach noch 2,5 Stunden lang fortgesetzt.

Nach dem Abkühlen erhält man eine stabile Dispersion mit einem Festgehalt von 59,5 %, einem K-Wert (nach Fikentscher, 1 % in Tetrahydrofuran/Wasser 93 : 7 (V/V)) von 105, sowie einer Viskosität von 16000 mPa·s (Brookfield, 20 UpM).

Vorzugsweise wird als Phenolharz-Dispersion eine Dispersion gemäß der europäischen Patentanmeldung 0 454 533 verwendet. Gegenstand dieser Anmeldung ist eine wäßrige Emulsion einer Harzzusammensetzung, umfassend ein (durch Reaktion von Alkylphenolen und Formol erhaltenes) Phenolresol (RD) mit einem Molekulargewicht von 1500 bis 3500, das mit MgO in einem Anteil von 5 bis 10 Gew.-% des Resols behandelt wurde, ein (durch Reaktion eines zyklischen oder geradkettigen Mono- oder Polyterpens mit einem Phenol erhaltenes) thermoplastisches Phenolterpenharz (RTD), wobei das Gewichtsverhältnis von Resol und Phenolterpenharz 1:2 bis 2:1 beträgt, und 5 bis 15 % Lösungsmittel, bezogen auf die RD/RTD-Harzmischung.

Vorzugsweise ist die Emulsion dadurch gekennzeichnet, daß das Verhältnis von Resol und Phenolterpenharz 40:60 bis 60:40 Gewichtsteile beträgt, daß das Resol im wesentlichen ein Produkt der Reaktion von Terbutylphenol-Formol ist, daß das Resol aus einer Mischung von Produkten der Reaktion von Terbutylphenol-Formol (TBDF) und Phenol-Formol-Terpenen (TDF) in einem Verhältnis (TBD:TD) von 90:10 bis 50:50 Gewichtsteilen besteht, daß das Verhältnis von TBD:TD 80:20 bis 65:35 Gewichtsteile beträgt, daß das Molekulargewicht des Phenolresols im wesentlichen im Bereich von 2000 bis 3000 liegt und daß MgO in einem Anteil von 6 bis 8 Gew.-% des Resols verwendet wird.

Der wäßrige Klebstoff, der ein Elastomer in wäßriger Dispersion und eine obige Emulsion aufweist, ist dadurch gekennzeichnet, daß er 10 bis 100 Teile 50 %ige Emulsion auf 100 Gewichtsteilen 50 %ige Elastomerdispersion aufweist, daß das Elastomer aus einem Polychloropren, einem Ethylen/-Vinylacetat-Copolymer, einem Acrylonitrilbutadien, einem Polyurethan oder einem Polyacrylat und seinen Copolymeren ausgewählt ist und daß er 25 bis 75 Teile 50 %ige Emulsion auf 100 Gewichtsteilen 50 %ige Elastomerdispersion aufweist.

Unter einem Resol wird hauptsächlich ein Butyl- Formaldehydharz mit einem Molekulargewicht von 1500 bis 3000, insbesondere von 2000 bis 3000 verstanden. An Metalloxiden kommen hauptsächlich in Frage:
MgO, ZnO oder CdO.

Vorzugsweise wird ein Phenolharz gemäß Beispiel 1 der EP 0 454 533 A1 verwendet.

Vorzugsweise beträgt der Gewichtsanteil des Copolymerisates 75 bis 85 Gew.-% und der des Phenolharzes 25 bis 15 Gew.-%, jeweils bezogen auf den Feststoffgehalt.

Der erfindungsgemäße Kontaktklebstoff kann darüber hinaus noch Zusätze enthalten, z.B. Konservierungsmittel oder Verdickungsmittel.

Der erfindungsgemäße Kontaktklebstoff wird durch einfaches Mischen der bekannten Komponenten hergestellt.

Die Erfindung wird nun im einzelnen beschrieben:
150 g der Dispersion gemäß Beispiel 1 der EP 0 547 507 werden mit 50 g der Dispersion gemäß Beispiel 1 der EP 0 454 533 durch Rühren innig vermischt.

Die Dispersion gemäß Beispiel 1 der EP 0 547 507 wurde folgendermaßen hergestellt:
In einem Reaktor, der mit Rückflußkühler, Rührer, Zudosiermöglichkeiten, Stickstoffeinleitung sowie Heiz- und Kühlmöglichkeiten versehen war, wurden 401 g entmineralisiertes Wasser, 8 g eines Nonylphenolpolyglykolethers (mit im Mittel 23 EO-Einheiten), 3 g eines C₁₅-Alkylsulfonates, 18 g Natriumvinylsulfonat, 5 g Acrylamid und 9,5 g Acrylsäure vorgelegt und der pH-Wert mit konzentrierter Ammoniaklösung auf 3,5 eingestellt. In diese Lösung wurden 355 g Vinylacetat, 139 g Vinyllaurat und 49 g 2-Ethylhexylacrylat einemulgiert. Es wurde auf 50 °C aufgeheizt und mit der Dosierung einer 3,5 %igen Ammoniumpersulfatlösung (10,5 g/h und einer 2 %igen Natriumformaldehydsulfoxylatlösung (10,5 g/h) begonnen. Nach Reaktionsbeginn wurden über einen Zeitraum von 4,5 Stunden ein Gemisch von 186 g 2-Ethylhexylacrylat, 87 g Methylmethacrylat, 15 g Hydroxyethylacrylat und 14 g Acrylsäure (Dosierung 1) sowie eine Lösung von weiteren 7,5 g des Nonylphenolpolyglykolethers und 6 g N-Methylolacrylamid in 35 g entmineralisiertem Wasser kontinuierlich zudosiert. Die Dosierung der Ammoniumpersulfatlösung und der Natriumformaldehydsulfoxylatlösung wurde danach noch 2,5 Stunden lang fortgesetzt. Nach dem Abkühlen erhielt man eine stabile Dispersion mit einem Festgehalt von 59,5 %, einem K-Wert (nach Dikentscher, 1 % in Tetrahydrofuran/Wasser 93:7 (V/V)) von 105 sowie einer Viskosität von 1600 mPa.s (Brookfield, 20 UpM).

Die Dispersion gemäß Beispiel 1 der EP 0 454 533 wurde folgendermaßen hergestellt:

### a) Herstellung des Resols

Verwendete Produkte:
- Wasser 117,25
- 29,6 %ige Natronlauge 31,00
- Terbutylphenol 58,16 )
- Dertophene A 115* 14,54 ) 100 reaktive Teile
- Paraformaldehyd 27,30 )
- 33 %iges HCl 25,00
- Wasser 7,80

*Bestehend aus einer Mischung von Diphenolmenthan, Dimenthenyl-Diphenol-Menthan, Menthenyl-Phenol und Isobornyl-Phenol.

Man füllt in einen Reaktor 17,25 Teile Wasser und 31 Teile 29,6 %ige Natronlauge, die man auf eine Temperatur von 50 °C bringt. Man führt 58,16 Teile Terbutylphenol ein und erhöht die Temperatur unter Rühren auf 70 - 75 °C. Bei 75 °C gibt man 14,54 Teile Terpenphenol in Plättchen (Dertophène A 115 der Firma DRT) bei und hält die Mischung 1 h auf dieser Temperatur. Nach Verringerung der Temperatur der Mischung auf 50 °C führt man 27,30 Teile Paraformaldehyd ein, erhöht die Temperatur auf 62 - 65 °C und hält sie 8 h lang. Anschließend kühlt man die Mischung auf 25 °C und neutralisiert mit 25 Teilen 33 %igem HCl, das mit 7,8 Teilen Wasser verdünnt ist. Man wäscht zweimal mit 100 Teilen Wasser während 10 min, um das gebildete NaCl zu entfernen. Das End-pH beträgt 3-4. Ausbeute: etwa 90 %.

### b) Vorvernetzung des Resols

85 Teilen des oben erhaltenen Resols gibt man 15 Teile einer Lösungsmittelmischung bei, die aus Toluol und einem Terpenlösungsmittel (Dertol 20 DD der Firma DRT) in einem Volumensverhältnis von 1:2 besteht.

Die erhaltene Lösung wird auf 98 ° ± 2 °C gebracht, der Temperatur der Mitnahme des Restwaschwassers und des Polykondensationswassers des Resols. Man hält die Lösung 2 h auf dieser Temperatur und erhöht sie dann in 30 min auf 105 ° ± 2 °C. Diese Temperatur wird etwa 2 h aufrechterhalten, um einen Bereich der molaren Masse des Resols von 2000 bis 3000 zu erhalten.

Man gibt nun dieser Lösung dieselbe Menge Lösung von 85 Teilen thermoplastischem Phenolterpenharz (Produkt der Reaktion von Diphenol-Menthan mit Terpenen, vertrieben von der Firma DRT unter der Marke Dertophene T) und 15 Teilen Toluol/Dertol 20 DD (1/2 v/v) bei.

Die auf diese Weise erhaltene Harzlösungsmischung M wird anschließend auf folgende Weise in Dispersion gebracht:

### c) Dispersion

100 Teile M werden bei einer Temperatur von 75 bis 90 °C in einen Turbomischer oder in einen Dispersionskneter eingebracht. Man gibt 20 Teile Tensid (Lanadin 121 (35 %ig) der Firma CFPI) bei und führt in 15 min 80 Teile auf 70 °C vorerwärmtes Wasser unter Rühren von 2000 rpm ein.

Man erhält eine CR-Emulsion mit den folgenden Merkmalen:
- Trockenextrakt 49,1
- pH 5,4
- Viskosität bei 20 °C 120 mPa.s
- Größe der Teilchen 0,5 µm

### d) Behandlung mit Metalloxid

Man läßt 400 Teile der oben erhaltenen CR-Emulsion bei Raumtemperatur unter leichtem Rühren mit 8 Teilen aktiver Magnesia (Jodzahl 150-170), d.h. 8 Gew.-%, bezogen auf das in der Harzzusammensetzung enthaltene reaktive Harz, in Anwesenheit von 10 Teilen Wasser reagieren: die MgO-Reaktion wird mit IR durch Untersuchung der den CH₂OH- und OH-Gruppen des Harzes entsprechenden Bander verfolgt. Diese Gruppen sind nach 5 Stunden Reaktion entfernt.

Man zerstört anschließend die Emulsion auf folgende Weise:
50 g CR-Emulsion werden durch Sättigung des Wassers der Emulsion mit Natriumchlorid im Überschuß ,,gebrochen". Die Harzphase wird anschließend in 125 ml Toluol mit Hilfe eines Flüssig-Flüssig-Extrahiergeräts bei Raumtemperatur gelöst. Man nimmt schließlich die Dosierung des Metalls des Oxids in den Aschen der Lösung vor.

Man stellt fest, daß von den 8 % Anfangsoxiden 6 % chemisch mit dem reaktiven Harz reagiert haben. Die freie Magnesia wird im Medium als Stabilisierungsmittel für das bei der Herstellung des Klebstoffs verwendete Elastomer belassen.

Anwendungstechnische Untersuchungen an Holzproben zeigen, daß sowohl die Wärmestandfestigkeit als auch die Zugscherfestigkeit gegenüber der unmodifizierten wäßrigen Dispersion gemäß Beispiel 1 der EP 0 547 507 bessere Werte ergeben.

Außerdem ist auch die Festigkeit der Bindung nach Lagerung in einem Feuchtklima bemerkenswert konstant und hoch. So nimmt die Zugscherfestigkeit von Holzproben (0,5 N/mm² Anpreßdruck) von 4 N/mm² auf nur 2 N/mm² nach 3 Tagen bei 30 °C und 80 % relativer Luftfeuchtigkeit ab. Bei dem lösungsmittelhaltigen Kontaktklebstoff "Pattex" fällt die Festigkeit von 3 auf 1,3 N/mm².

Trotz der guten Feuchtklima-Festigkeit ist der getrocknete Klebstoff-Film leicht von Textilien und anderen Oberflächen zu entfernen. So genügt bei einem Jeans-Stoff ein Waschgang bei 40 °C in einer üblichen Waschmaschine. Von Glas und lackiertem Holz ist der Klebstoff mit einer tensidhaltigen wäßrigen Lösung leicht zu entfernen, z.B. mit einem Pril-haltigen, warmen Wasser nach 5 Minuten Einwirkzeit. Bei den handelsüblichen lösungsmittelhaltigen Kontaktklebstoffen muß man organische Lösungsmittel verwenden, z.B. Waschbenzin. Dabei besteht die Gefahr, daß die Oberflächen angegriffen werden oder daß der Klebstoff nicht restlos entfernt wird.

Aufgrund dieser Eigenschaften eignet sich der erfindungsgemäße Kontaktklebstoff nicht nur für industrielle Anwendungen, sondern auch für Anwendungen im Haushalt, z.B. bei Bastelarbeiten.

Der erfindungsgemäße Kontaktklebstoff gemäß Beispiel 1 hat auch eine gute Lagerzeit. Nach 2 Jahren Lagerung bei 20 °C erhöhte sich die Viskosität von 12 auf 14 Pas. Nach einer Lagerzeit von 6 Monaten bei 40 °C fiel sie auf 10,8 Pas ab. Es ist eine typische Eigenschaft für die erfindungsgemäßen Klebstoffe, daß ihre Viskosität unter den angegebenen Bedingungen im Bereich von ± 20% des Ausgangswertes schwankt. Die Viskosität sollte im Bereich von 9 bis 20 Pas liegen (Brookfield, RVT, Spindel 5, 10 U/Min., 20 °C).

## Patentansprüche

1. Wäßrige Kontaktklebstoffdispersion auf der Basis eines Copolymerisates aus Vinylester, Acrylsäureester, Methacrylsäureester, ethylenisch ungesättigten vernetzend wirkenden Verbindungen, ethylenisch ungesättigten Carbonsäuren, (Meth)-acrylamiden, ethylenisch ungesättigten hydroxyalkylfunktionellen Verbindungen und ethylenisch ungesättigten Sulfaten und/oder Sulfonaten gekennzeichnet durch einen Zusatz eines Phenolharzes auf der Basis eines Resols, eines Metalloxids und eines thermoplastischen Phenol-Terpen-Harzes, wobei der Anteil des Copolymerisates 60 bis 95 Gew.-% und der des Phenolharzes 5 bis 40 Gew.-% des Feststoffgehaltes ausmacht.

2. Kontaktklebstoffdispersion gemäß Anspruch 1, gekennzeichnet durch einen Anteil des Copolymerisates von 75 bis 85 Gew.-% und einen Anteil des Phenolharzes von 25 bis 15 Gew.-%, bezogen auf den Feststoffgehalt.

3. Kontaktklebstoffdispersion nach Anspruch 1 oder 2, dadurch gekennzeichnet, daß das Copolymerisat eine Dispersion gemäß Beispiel 1 der EP 0 547 507 ist, wobei folgende Produkte verwendet wurden:
401 g entmineralisiertes Wasser, 8 g eines Nonylphenolpolyglykolethers (mit im Mittel 23 EO-Einheiten), 3 g eines C₁₅-Alkylsulfonates, 18 g Natriumvinylsulfonat, 5 g Acrylamid, 9,5 g Acrylsäure, konzentrierte Ammoniaklösung, 355 g Vinylacetat, 139 g Vinyllaurat, 49 g 2-Ethylhexylacrylat, Ammoniumpersulfatlösung, Natriumformaldehydsulfoxylatlösung, 186 g 2-Ethylhexylacrylat, 87 g Methylmethacrylat, 15 g Hydroxyethylacrylat, 14 g Acrylsäure, sowie eine Lösung von weiteren 7,5 g des Nonylphenolpolyglykolethers und 6 g N-Methylolacrylamid in 35 g entmineralisertem Wasser.

4. Kontaktklebstoffdispersion nach mindestens einem der Ansprüche 1 bis 3 dadurch gekennzeichnet, daß die Phenolharzdispersion eine Dispersion gemäß Beispiel 1 der EP 0 454 533 ist, wobei folgende Produkte verwendet wurden (in Teilen):
- Wasser 117,25
- 29,6 %ige Natronlauge 31,00
- Terbutylphenol 58,16)
- Dertophäne A 115 14,54 )
- Paraformaldehyd 27,30 ) 100 reaktive Teile
- 33 %iges HCl 25,00
- Wasser 7,80,
wobei Dertophene A 115 aus einer Mischung von Diphenolmenthan, Dimenthenyl-Diphenol-Menthan, Menthenyl-Phenol und Isobornyl-Phenol besteht.

5. Kontaktklebstoffdispersion nach mindestens einem der Ansprüche 1 bis 3 gekennzeichnet durch einen Zusatz an Konservier

## Claims

1. An aqueous contact adhesive dispersion based on a copolymer of vinyl esters, acrylates, methacrylates, ethylenically unsaturated crosslinking compounds, ethylenically unsaturated carboxylic acids, (meth)acrylamides, ethylenically unsaturated hydroxyalkylfunctional compounds and ethylenically unsaturated sulfates and/or sulfonates, characterized by an addition of a phenolic resin based on a resol, a metal oxide and a thermoplastic phenol-terpene resin, the copolymer making up 60 to 95% by weight and the phenolic resin 5 to 40% by weight of the solids content.

2. A contact adhesive dispersion as claimed in claim 1, characterized in that the copolymer makes up 75 to 85% by weight and the phenolic resin 25 to 15% by weight of the solids content.

3. A contact adhesive dispersion as claimed in claim 1 or 2, characterized in that the copolymer is a dispersion according to Example 1 of EP 0 547 507, the following products having been used: 401 g of demineralized water, 8 g of a nonylphenol polyglycol ether (containing on average 23 EO units), 3 g of a C₁₅ alkyl sulfonate, 18 g of sodium vinyl sulfonate, 5 g of acrylamide, 9.5 g of acrylic acid, concentrated ammonia solution, 355 g of vinyl acetate, 139 g of vinyl laurate, 49 g of 2-ethylhexyl acrylate, ammonium persulfate solution, sodium formaldehyde sulfoxylate solution, 186 g of 2-ethyl hexyl acrylate, 87 g of methyl methacrylate, 15 g of hydroxyethyl acrylate, 14 g of acrylic acid and a solution of another 7.5 g of the nonylphenol polyglycol ether and 6 g of N-methylol acrylamide in 35 g of demineralized water.

4. A contact adhesive dispersion as claimed in at least one of claims 1 to 3, characterized in that the phenolic resin dispersion is a dispersion according to Example 1 of EP 0 454 533, the following products having been used (in parts):
- water 117.25
- 29.6% sodium hydroxide 31.00
- tert. butyl phenol 58.16 )
- Dertophbne A 115 14.54 )
- paraformaldehyde 27.30 ) 100 reactive parts
- 33% HCl 25.00
- water 7.80,
Dertophène A 115 consisting of a mixture of diphenol methane, dimenthenyl diphenol menthane, menthenyl phenol and isobornyl phenol.

5. A contact adhesive dispersion as claimed in at least one of claims 1 to 3, characterized by an addition of preservative.

## Revendications

1. Dispersion aqueuse d'adhésif de contact à base d'un copolymère d'esters de vinyle, d'acrylates, de méthacrylates, de composés à action réticulante à insaturation éthylénique, d'acides carboxyliques à insaturation éthylénique, de (méth)-acrylamides, de composés à fonction hydroxyalkylique à insaturation éthylénique et de sulfates et/ou de sulfonates à insaturation éthylénique, caractérisée par l'addition d'une résine phénolique à base d'un résol, d'un oxyde métallique et d'une résine phénolique-terpénique thermoplastique, la proportion du copolymère représentant 60 à 95 % et celle de la résine phénolique, 5 à 40 % en poids de la concentration en matières solides.

2. Dispersion aqueuse d'adhésif de contact selon la revendication 1, caractérisée par une proportion du copolymère de 75 à 85 % en poids et par une proportion de la résine phénolique de 25 à 15 % en poids, par rapport à la concentration en matières solides.

3. Dispersion aqueuse d'adhésif de contact selon la revendication 1 ou 2, caractérisée en ce que le copolymère est une dispersion selon l'exemple 1 du document EP 0 547 507, pour laquelle les produits suivants ont été mis en oeuvre: 401 g d'eau déminéralisée, 8 g d'un nonylphénolpolyglycoléther (avec en moyenne 23 unités d'EO), 3 g d'un alkylsulfonate en C₁₅ 18 g de vinylsulfonate sodique, 5 g d'acrylamide, 9,5 g d'acide acrylique, une solution d'ammoniaque concentrée, 355 g d'acétate de vinyle, 139 g de laurate de vinyle, 49 g d'acrylate de 2-éthylhexyle, une solution de persulfate d'ammonium, une solution de sulfoxylate de formaldéhyde sodique, 186 g d'acrylate de 2-éthylhexyle, 87 g de méthacrylate de méthyle, 15 g d'acrylate d'hydroxyéthyle, 14 g d'acide acrylique, ainsi qu'une solution d'encore 7,5 g de nonylphénolpolyglycoléther et 6 g de N-méthylolacrylamide dans 35 g d'eau déminéralisée.

4. Dispersion aqueuse d'adhésif de contact selon au moins une des revendications 1 à 3, caractérisée en ce que la dispersion de résine phénolique est une dispersion selon l'exemple 1 du document EP 0 454 533, pour laquelle les produits suivants ont été mis en oeuvre (en parties):
- Eau 117,25
- soude caustique à 29,6 % 31,00
- Terbutylphénol 58,16)
- Dertophène A 115* 14,54 )
- Paraformaldéhyde 27,30 ) 100 parties réactives
- HCl à 33 % 25,00
- Eau 7,80
le Dertophène A 115 étant constitué d'un mélange de diphénolmenthane, de dimenthényl-diphénol-menthane, de menthénylphénol et d'isobornyl-phénol.

5. Dispersion aqueuse d'adhésif de contact selon au moins une des revendications 1 à 3, caractérisée par l'addition d'un conservateur.
